# EUROPEAN PATENT SPECIFICATION

(11) **EP 3 596 912 B1**
(45) Date of publication and mention of the grant of the patent: **14.09.2022**
(21) Application number: 18711880.7
(22) Date of filing: 13.03.2018
(51) Int. Cl.: H04M 3/20

(54) **SYSTEM AND METHOD FOR SERVICE DELIVERY**
SYSTEM UND VERFAHREN ZUR DIENSTBEREITSTELLUNG
SYSTÈME ET PROCÉDÉ POUR LA PRESTATION DE SERVICES

(30) Priority: 13.03.2017 US 201762470838 P; 17.11.2017 US 201762588072 P; 23.02.2018 US 201862634500 P
(43) Date of publication of application: 22.01.2020
(73) Proprietor: CommScope Connectivity Belgium BVBA, 3010 Kessel-Lo (BE)
(72) Inventor: STORBECK, Carsten, Hickory North Carolina 28602 (US); DE RIJCK, Jan Jozef, Hickory North Carolina 28602 (US); BORTELS, Vivianne, Hickory North Carolina 28602 (US)
(74) Representative: Murgitroyd & Company
(86) International application number: PCT/EP2018/056252
(87) International publication number: WO 2018/167068

(56) References cited:
- EP-A1- 3 076 682
- US-B1- 6 570 974

## Description

### Cross-Reference to Related Applications

This application claims the benefit of U.S. Patent Application Serial No. 62/470,838, filed on March 13, 2017, and claims the benefit of U.S. Patent Application Serial No. 62/588,072, filed on November 17, 2017, and claims the benefit of U.S. Patent Application Serial No. 62/634,500, filed on February 23, 2018.

### Background

In telecommunications systems, there is a need to re-route from a legacy (existing) service to a new service with respect to customers who are switching from the legacy service to the new service.

### Summary

A system and method of providing telecommunications service comprising: an interruption free copper cable interception and re-routing from an existing service to a new service avoiding transmission effects during the changeover, including a conductive tap, and a termination module with a disconnection plug. An example of a method describing the configuration of different services provided to a subscriber is disclosed by the document D1: EP 3076682, ADTRAN INC [US], published on 5 October 2016

Testing of the new service pathways is also provided through the termination module.

A system and method of providing telecommunications service is provided wherein non-active pairs of wires are eliminated during re-routing from an existing service to a new service.

Another system and method allows for testing of the new service.

Further systems and methods are provided for removing the termination module in an effort to save space, if desired. The invention is defined by the method claim 1, and by the corresponding system claim 15.

### Brief Description of the Drawings

Figure 1 is a schematic view showing a system and method for switching between legacy service and new service;
Figure 2 is a schematic representation of a termination block or module shown in the system of Figure 1;
Figure 3 is a schematic representation of a disconnection contact of the termination block or module of Figure 2, shown in a normally-closed state;
Figure 4 is a schematic representation of the disconnection contact of Figure 3, shown in an open state;
Figures 5-7 relate to schematics of systems and methods for locating active wires, and then connecting a new service to the active wires; wherein Figure 5 shows an existing service including a termination module for use in testing for active service, Figure 6 shows the disconnection of the existing service to a new service through the termination module, and Figure 7 shows connection of the new service directly to the customer or subscriber without the presence of the termination module;
Figures 8-11 and 11A are similar representations of the systems and methods shown in Figures 5-7, wherein a termination module is utilized for testing and connection, wherein an existing service is tested (Figure 8), active wire pairs are connected to a new service (Figures 8A, 8B, 8C, 9), the existing service is removed (Figure 10) and, the termination module can be removed at the conclusion of the testing and connection to the new service (Figures 11 and 11A); and
Figures 12-20 show an example cabling system and method showing actual cables and termination modules, shown schematically in Figures 5-7 and Figures 8-11A.

### Detailed Description

A system 10 and a related process for an interruption free copper cable interception and re-routing from a legacy (existing) service to a new service is provided. The system 10 avoids transmission effects during a change over. In the current or existing state, the signal flow goes via a copper multi-pair OSP (outside plant) cable from the legacy service side 20 to the subscriber or customer 30 over pathways 1 and 2. The signal is carried on cable 22 including portion 22a and 22b. Typically, pathways 1 and 2 are the same cable and are not interrupted at area D. Legacy service is delivered in the direction of arrows 24.

When new service is desired, on a point on the existing copper cable 22, an access to the buried or overhead copper cable needs to be provided by taking the outer insulation off or otherwise piercing the jacket of the cable to gain access to the individual copper cables of the multi-pair cable. Preferably, the access is selectable from a variety of access option. These individual selectable copper cables will be parallel and interruption free electrically connected to a single line connector B which provides three electrical access points on the same electrical potential. A PICABOND tm connector, by CommScope, Inc. is one example of a device to add a tap line by splicing to a conductor of a multi-conductor telephone cable.

The two electrical connections 4 are now electrically replacing the old line through connection pathway 1 along pathway 2 on conductor 22b. The third leg 5 of the single line connector B will be terminated with another individual copper cable 5 which provides a connection to the electrical connector A. An example of connector A is an LSA plus tm termination module. The termination module may also be referred to as a disconnect module.

This procedure can be repeated for multiple amounts of copper cables up to the maximum capacity of the legacy multi-pair OSP cable. The electrical connector A is constructed in a way that two connection points for one individual copper cable are isolated against each other by using a disconnection element C which electrically isolates both termination sides. This disconnection element C can be designed as an individual or a multi-pair isolating element. The cable side 3 of the electrical connector A is already pre-cabled to the new service device.

With this type of cable arrangement, an interruption free method of individual copper pair access and re-routing to a new service device has been realized, but not put in final electrical connection from the new service to the customer home due to the isolating function of the disconnection element C. Besides the blocking of the new service signal, this disconnection element C is also blocking electrical interferences from the new copper cables to the legacy copper multi-pair OSP cables still carrying the legacy service. Once the disconnection element C is removed and the legacy service cut, the new service is delivered in the direction of arrows 44.

In addition, the disconnection element C can be used for electrical copper line tests using the 2 pole method or the 4 pole method. The 2 pole method uses a test plug in the disconnect module that looks only at one pair of wires (in one direction). The 4 pole method uses a test plug in the disconnect module that looks at both pairs of wires (in both directions).

During the transition time of this described procedure the electrical connector arrangements B and A will be integrated in an enclosure D which allows access multiple times together with a sealed protection against environmental influence. Once individual copper cables for new service activation are identified and terminated with the above described method, the final service activation can be carried out by physically cutting the re-routed copper cables at the legacy service multi-pair OSP copper cable 6. Afterwards, the disconnection element C will be taken out of the connector A. As a result, a new electrical connection has been made from the new service point to the customer's home. The enclosure D can be changed over on request on a kind of heat-shrinkable closure device for final and commercial efficient environmental protection in a buried or over-head type of copper cable structure.

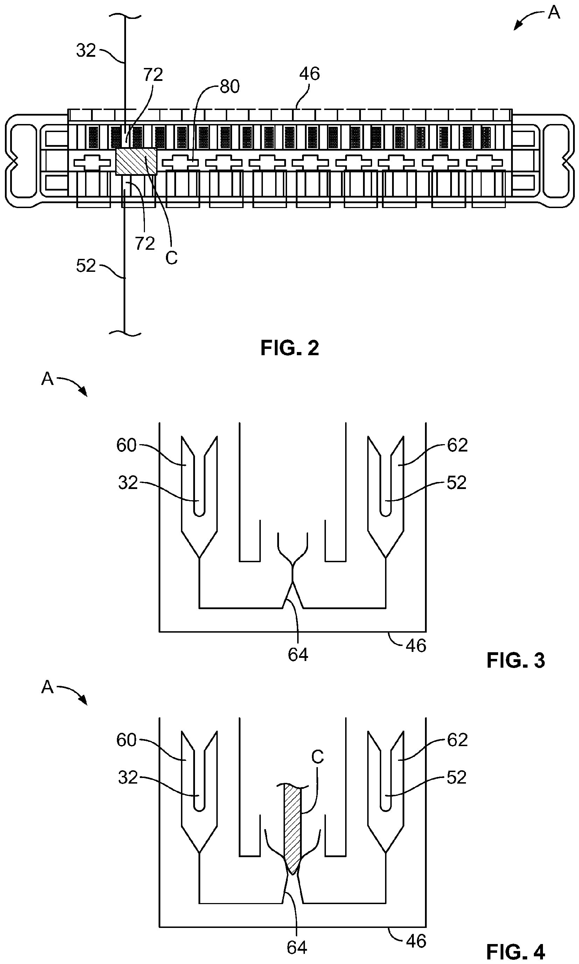

The system 10 of Figures 2-4 generally includes a termination block or module 46. In the illustrated system 10, the termination module 46 is configured to selectively route the signal to and from the new service 40.

Referring to Figures 2-4, to provide new service to a particular subscriber, a service technician accesses a dedicated site 72 of the terminating module 46. The dedicated site 72 is a particular site or connection location of the termination module 46 that is dedicated to the particular subscriber. The technician re-routes the telephone signal at that dedicated site 72 of the termination module 46 to the customer 30.

Referring to Figures 2-4, the terminating module 46 includes a plurality of block sites 72. To prevent new service for the subscriber 30, the termination module 46 is configured so that a signal path from the incoming block or module line 52 to the distribution line 32 is disrupted by plug C. Plug C fits into opening 80. Plug C disconnects the disconnection contact 64 of termination module 46.

Referring to FIGS. 2-4, in the illustrated embodiment, the termination module 46 is an insulation displacement connection (IDC) block. Unlike blocks that rely on screw-terminals or a wire wrapping technique to secure wires to the block, IDC blocks provide for a gas-tight connection without requiring the removal of insulation covering the wire. Connection is achieved once a wire is placed into an IDC block contact, and then punched down, typically via an insertion tool that presses the wire against the contact to form the gas-tight connection. Because of the ease of use and effectiveness, termination blocks utilizing IDC contacts 60, 62 have become the standard within the telecommunications industry.

To modify the termination module 46 and activate the new service (i.e., disrupt the first signal path), the technician can easily activate and de-activate the new service to the subscriber 40 simply by inserting and removing the activation plug C into and from the termination module 46. Details of the function and operation of another system including a termination module are shown a described in U.S. patent application Ser. Nos. 10/301,960 (U.S. Patent No. 7,155,004) and 10/725,108 (U.S. Patent No. 7409053). The termination module may also be referred to as a Krone style multiple contact pair block, one specific example being the LSA plus tm block noted above, from Krone GmbH, ADC GmbH, TE Connectivity, or CommScope, Inc. In general, with the systems and methods herein legacy service is provided at day 1. At day 2, a tap line can be added. The tap line is electrically connected (with a disconnection contact in the open or disconnected state) to the new service. Then the legacy service is cut or disrupted, and then the disconnection contact is placed in the closed or connected state, wherein new service is provided.

The connections described herein are made wire by wire. An advantageous aspect is to test whether a pair of wires is active. This can only be done when one can measure between the two wires of a pair. The wire pairs are labeled with the wires as 1a, 1b (pair 1), 2a, 2b (pair 2), etc. (European style) or in the US: 1T, 1R (pair 1), 2T, 2R (pair 2), etc. (for Tip and Ring).

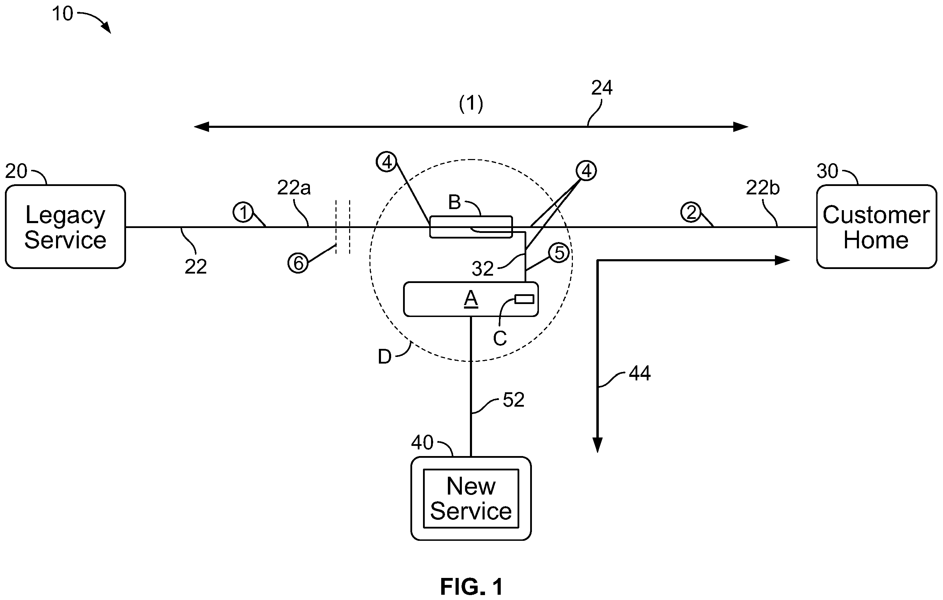

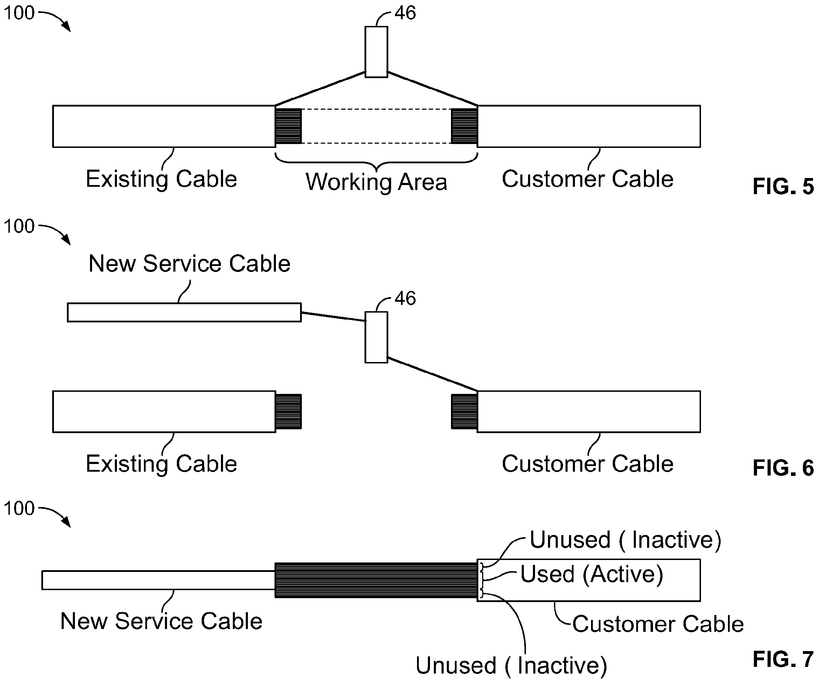

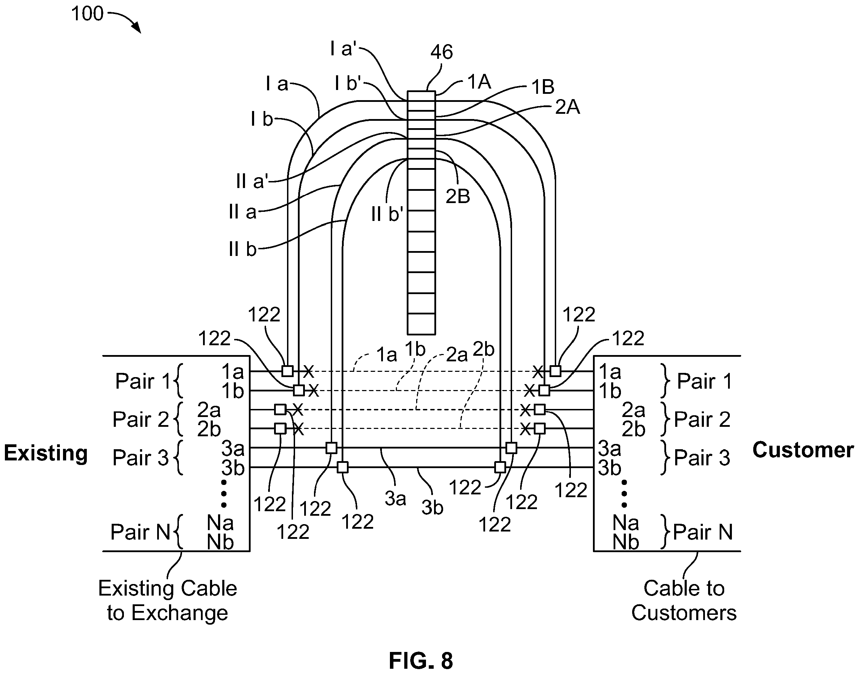

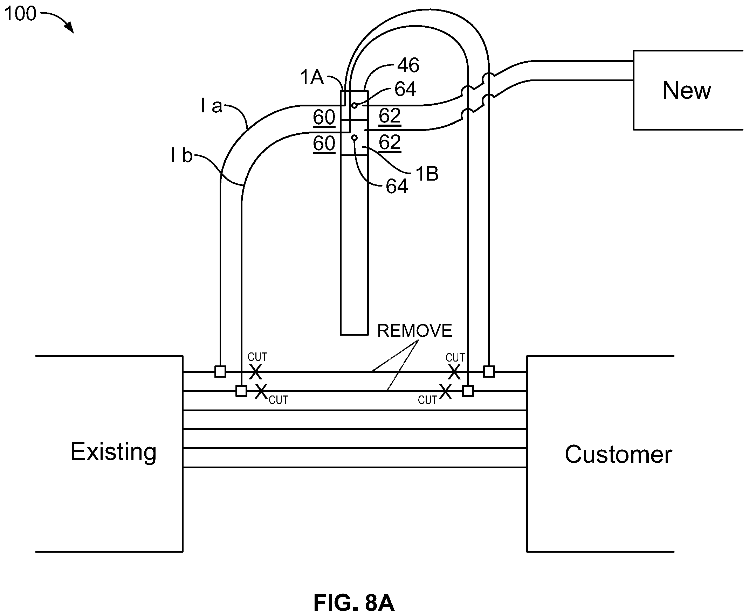

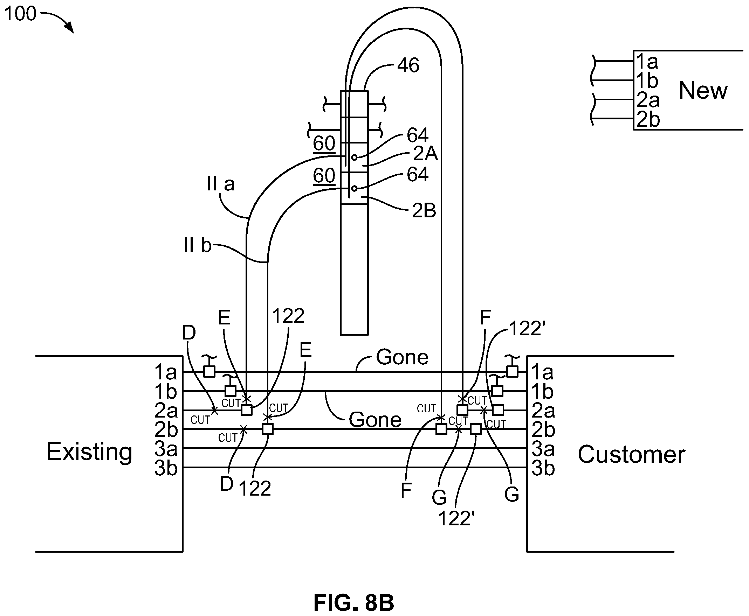

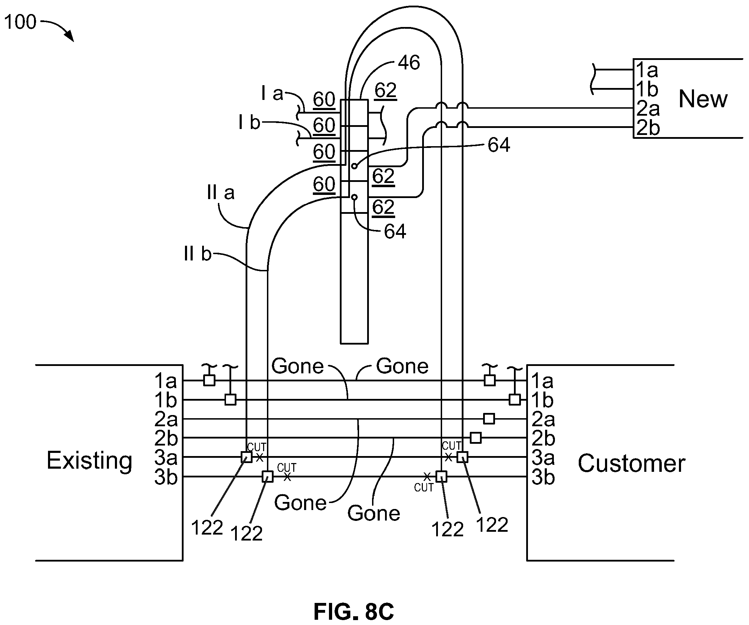

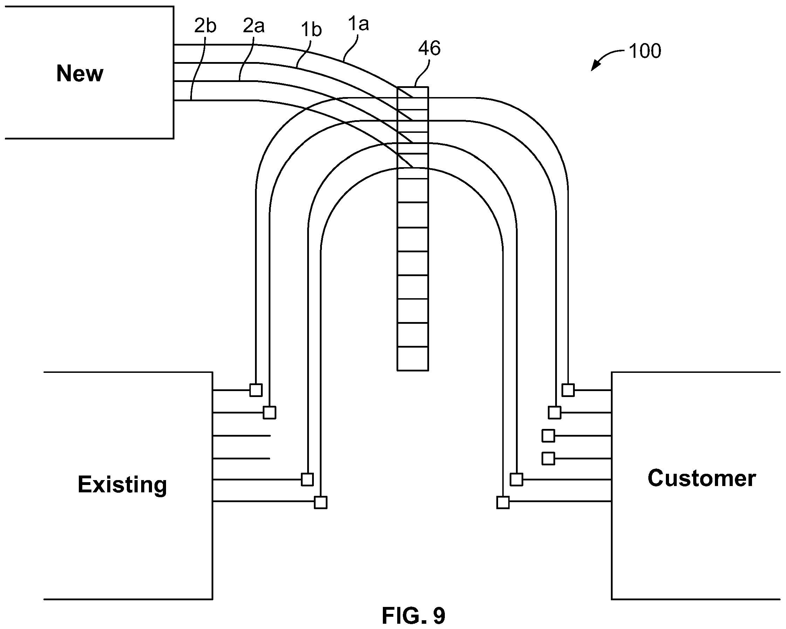

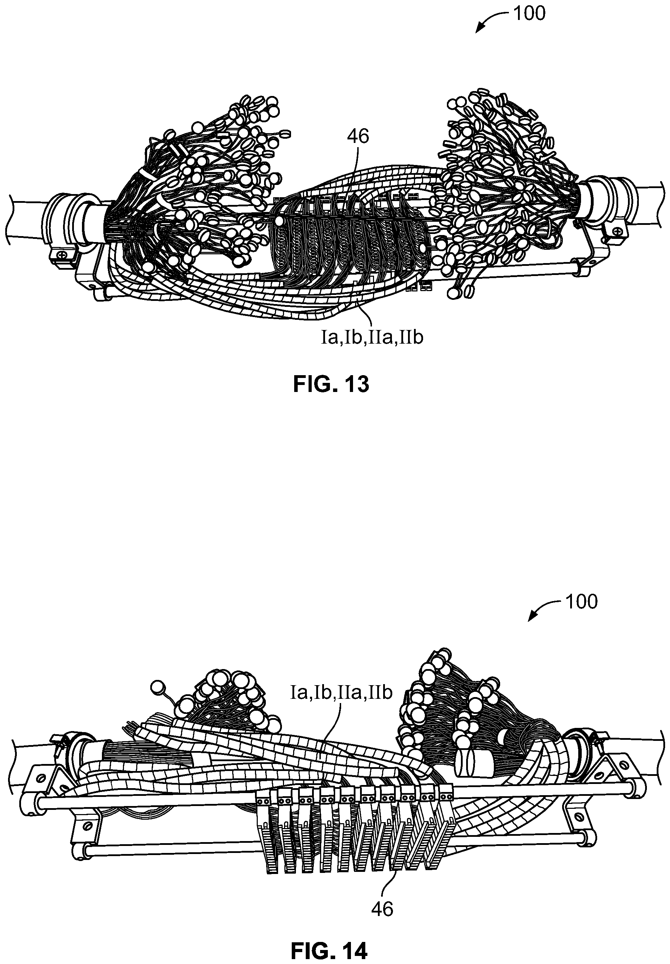

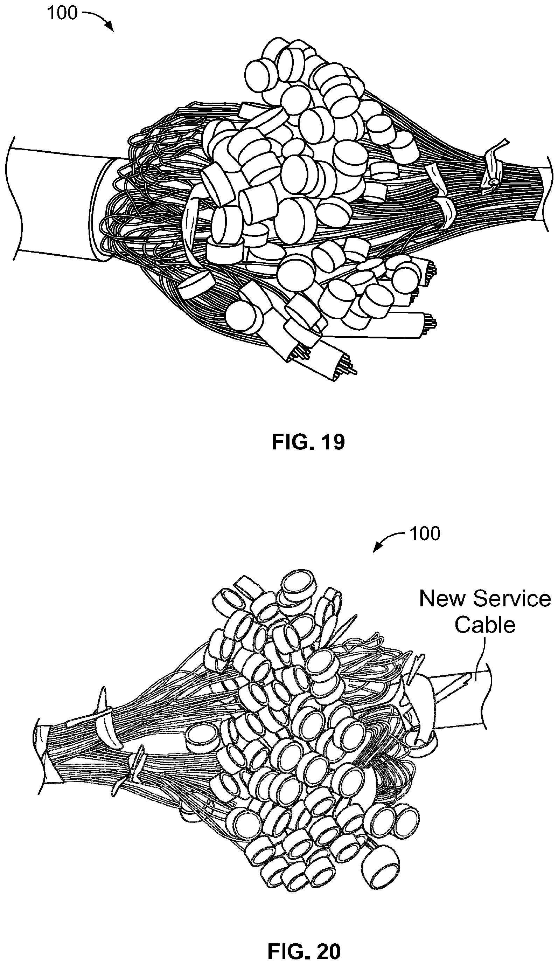

A related system and method is shown in Figures 5-20 to the system and method of Figures 1-4. The system 10 of Figures 1-4 utilizes single half taps B for each wire. An alternate system 100 and related method is provided as shown in Figures 5-20 and described below. The alternate system 100 is results in the removal of existing or legacy service and a cut over to new service.

System 100 may offer advantages such as allowing for more working room for the technician doing the cut over. Other advantages include locating and eliminating unused wire pairs from the cut over, saving time and/or storage space for the wire connection structure. Some aspects of system 100 are advantageous in that the final cut over may allow a test function. Other aspects of system 100 are advantageous in that the final cut over may allow for reduced storage needs for the wire connection structure if the test function is removed at the conclusion of the cutover.

Half taps 122 like connectors B above are used in system 100, as well as one or more of blocks or termination modules 46 as described above and shown in Figures 2-4.

One Example procedure is:
I. Test pair 1 at block or module 46:
   - Add a wire (Ia) with two half taps 122 in parallel to wire 1a. This parallel wire is going through the IDC connector 1a at port 1A of the block (IDC 60).
   - Add a wire (Ib) with two half taps 122 in parallel to wire 1b. This parallel wire is going through the IDC connector 1b at port 1B of the block.
   - Test whether pair 1 is active by measuring between the contacts Ia' and Ib' on the block. This is done by inserting a test plug in the disconnect slot 64 of the block.
   - A. If active, remove the original wires 1a and 1b between the half taps 122.
   - B. If not active, see below II.B.
II. Test pair 2 at block:
   - Add a wire (IIa) with two half taps 122 in parallel to wire 2a. This parallel wire is going through the IDC connector IIa' at port 2A of the block.
   - Add a wire (IIb) with two half taps 122 in parallel to wire 2b. This parallel wire is going through the IDC connector IIb' at port 2B of the block.
   - Test whether pair 2 is active by measuring between the contacts IIa' and IIb' on the block. This is done by inserting a test plug in the disconnect slot 64 of the block.
   - A. If active, remove the original wires 2a and 2b between the half taps.
   - B. If not active, cut wires 2a, 2b, IIa and IIb at D, E, F, G. Optionally add clear caps 122' at D & G.
III. Test pair 3 at block, under assumption that pair 2 was not active:
   - Add a wire (IIa) with two half taps 122 in parallel to wire 3a. This parallel wire is going through the IDC connector IIa' of the block.
   - Add a wire (IIb) with two half taps 122 in parallel to wire 3b. This parallel wire is going through the IDC connector IIb' of the block.
   - Test whether pair 3 is active by measuring between the contacts IIa' and IIb' on the block. This is done by inserting a test plug in the disconnect slot 64 of the block.
   - A. If active, remove the original wires 3a and 3b between the half taps.
   - B. If not active, see II.B

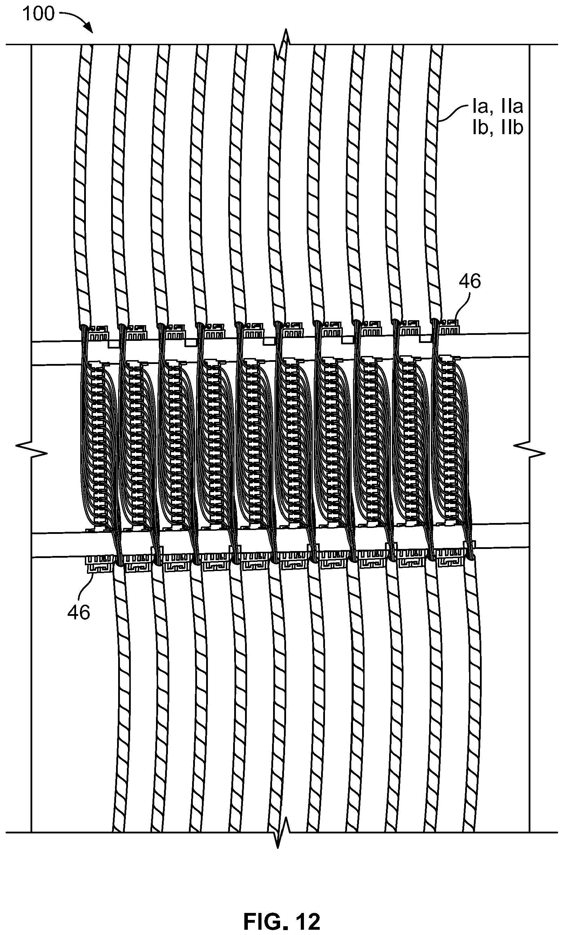

See also Figures 12-15 showing various steps in the testing and cable preparation.

When all active pairs are connected to the block or blocks, first insert insulating plugs in all the disconnect slots 64 of the blocks. This to ensure that no stub (bridge tap) is seen on the pair when the cable with the new service is connected to the other side of the blocks (IDC 64).

Connect the cable with the pairs that carry the new service to the other side of the blocks. This can be done at a later time.

Optionally test the new service at the block. This can be done by inserting a test plug in the disconnect slot and connecting a handheld tester to the pair that carries the new service. If the new service on block position I is ok, cut the wires Ia and Ib at the exchange side of the block. Then remove the test plug or insulating plug. Repeat for each position on the blocks.

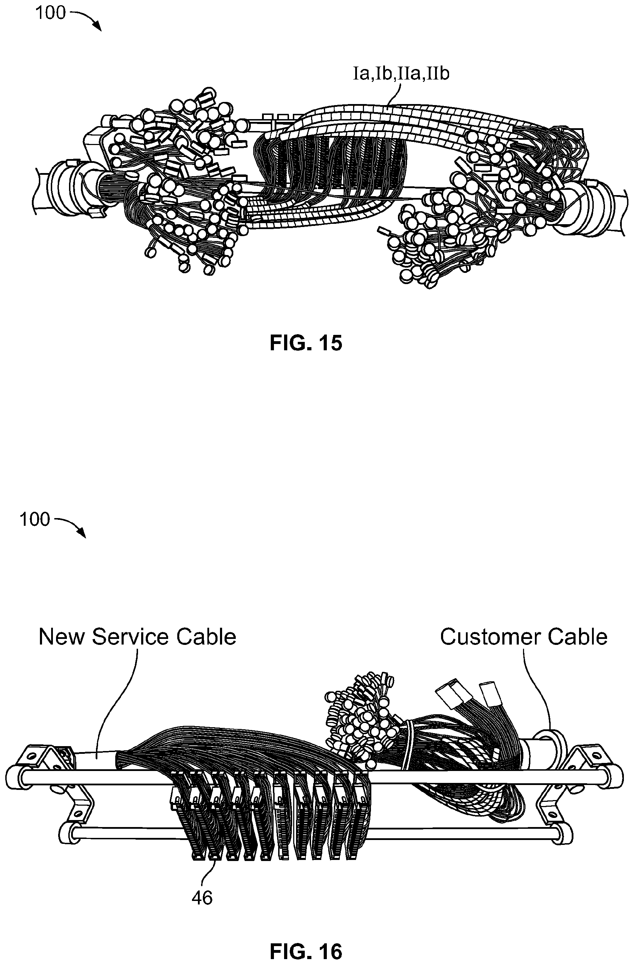

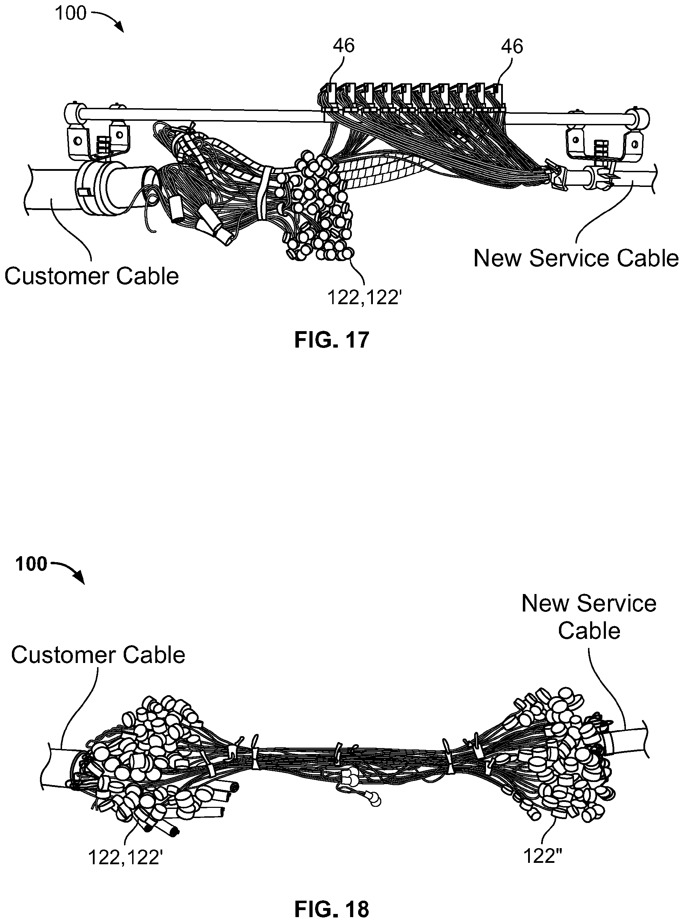

When all active pairs are connected to the new service, the cable going back to the exchange can be removed. See Figures 16 and 17.

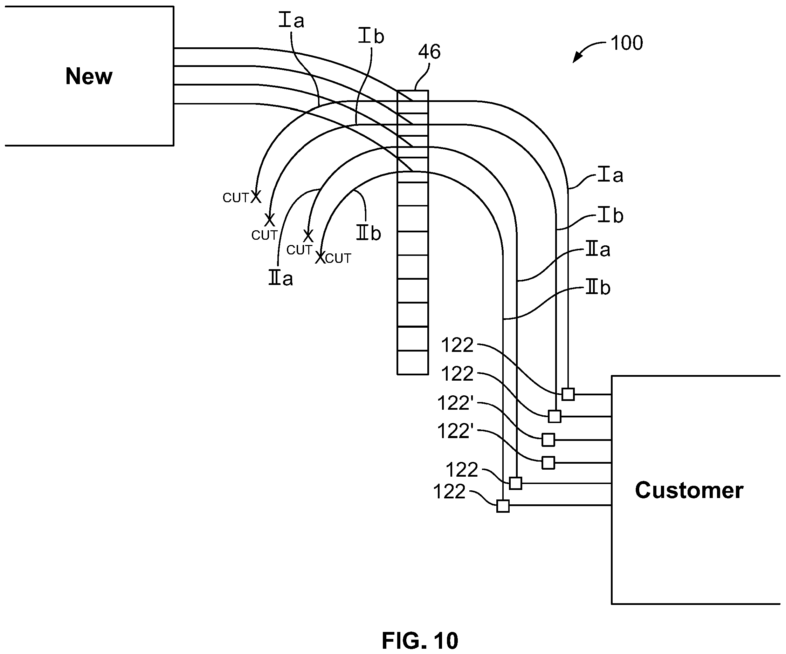

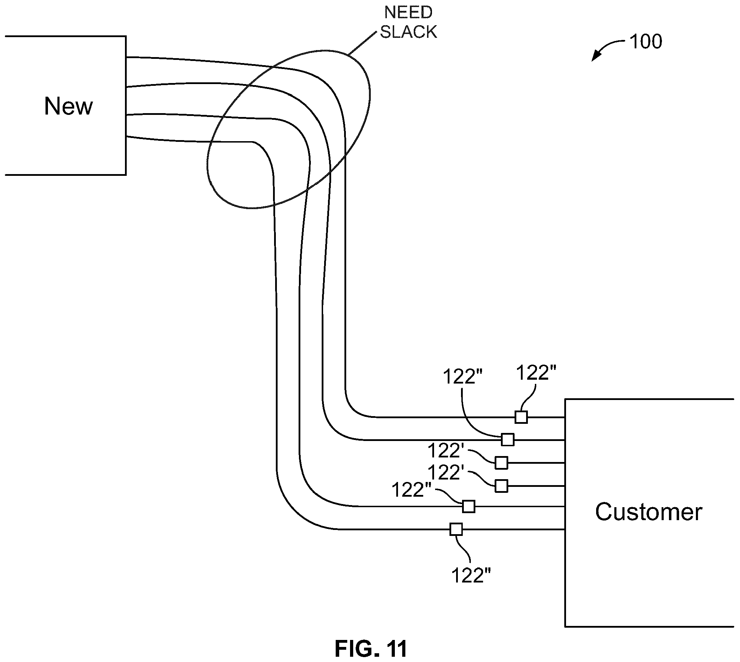

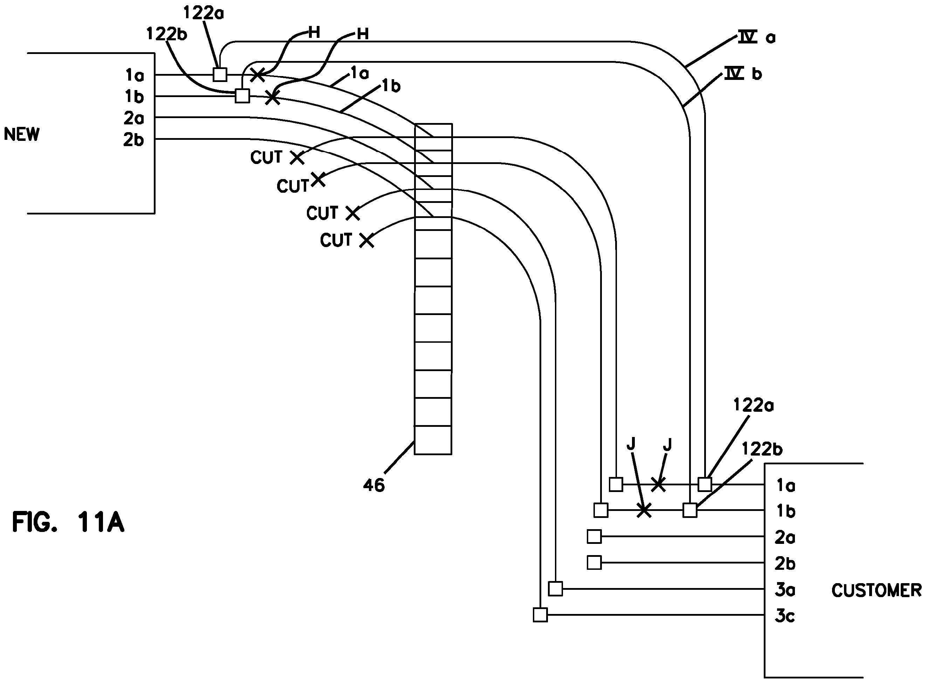

Three alternatives:
1. The blocks remain in place: advantage is that there is a test access point in the closure that will enclose the cables and blocks. Disadvantage is that it requires more space. See Figures 10, 16 and 17.
2. The blocks are removed and a direct connection with a connector 122" is made between the pairs carrying the new service and the active pairs in the cable going to the customers. Advantage: requires less space for the final enclosure. Disadvantage: will cause a short service interruption and no test access point anymore. See Figures 11 and 18-20.
3. The blocks are removed without a loss of service. A direct connection with new wires IVa, IVb each with two half taps 122a, 122b is provided. Once the direct connection is provided, cut wires 1a, 1b of the new service at H, and cut the customer wires 1a, 1b at J. Repeat for all the active pairs of the customer cable. This results in no service interruption. This also requires less space for the final enclosure as in option 2. See Figures 11A, and 18-20.

## Claims

1. A method of providing telecommunications service comprising:
providing a signal service pathway (1, 2) from a first service source (20) to a subscriber location (30), wherein the signal service pathway (1, 2) includes a first copper signal pathway (22, 22a, 22b) including at least one pair of twisted copper wires (la, 1b, 2a, 2b, 3a, 3b, Na, Nb);
accessing at least one of the pairs of wires (1a, 1b, 2a, 2b, 3a, 3b, Na, Nb), and adding a conductive tap line (32, Ia, Ib, IIa, IIb) to each wire (la, 1b, 2a, 2b, 3a, 3b, Na, Nb);
terminating the conductive tap lines (32, Ia, Ib, IIa, IIb) at a termination module or termination modules (A, 46) with a normally closed configuration, wherein the normally closed configuration includes a normally closed contact set (64), wherein a disconnection plug (C) holds open the normally closed contact set (64);
terminating a second copper signal pathway (52) including at least one pair of twisted copper wires at the termination module or termination modules (A, 46);
cutting or otherwise disrupting the signal service pathway (1, 2) at a location between the first service source (20) and the conductive tap lines (32, Ia, Ib, IIa, IIb);
after the signal service pathway (1, 2) is cut, removing the disconnection plug (C), wherein the second copper signal pathway (52) is connected to the first copper signal pathway (22, 22b) and to the subscriber location (30).

2. The method of claim 1, wherein each conductive tap line (32, Ia, Ib, IIa, IIb) is added using a single line connector (B, 122, 122', 122") so that the conductive tap line (32, Ia, Ib, IIa, IIb) to each wire (la, 1b, 2a, 2b, 3a, 3b, Na, Nb) is electrically connected in parallel and interruption free, the single line connector (B, 122, 122', 122") providing three electrical access points on a same electrical potential.

3. The method of claim 1, wherein the termination module or termination modules (A, 46) includes an insulation displacement connection block.

4. The method of claim 1, wherein the second copper signal pathway (52) is pre-cabled to a new service device (40).

5. The method of claim 2, wherein the termination module or termination modules (A, 46) and the single line connectors (B) are integrated in an enclosure (D).

6. The method of claim 5, wherein the enclosure (D) allows access multiple times and provides sealed protection against environmental influence.

7. The method of claim 5, wherein the enclosure (D) includes a heat-shrinkable closure device.

8. The method of claim 1, wherein each conductive tap line (32, Ia, Ib, IIa, IIb) is added in parallel to the respective wire (la, 1b, 2a, 2b, 3a, 3b, Na, Nb) using two half taps (B, 122, 122', 122"), each conductive tap line (32, Ia, Ib, IIa, IIb) going through an IDC connector (60) at a respective port (72) of the termination module or termination modules (A, 46).

9. The method of claim 8, further comprising:
testing whether wires (la, 1b, 2a, 2b, 3a, 3b, Na, Nb) of the at least one twisted pair are active by measuring between the IDC connectors (60) of the termination module or termination modules (A, 46), wherein measuring between the IDC connectors (60) is implemented by inserting a test plug in a disconnect slot (80) of the termination module or termination modules (A, 46);
if active, removing the wires (la, 1b, 2a, 2b, 3a, 3b, Na, Nb) of the at least one twisted pair between the two half taps (B, 122, 122', 122"); and
if not active, cutting both the wires (la, 1b, 2a, 2b, 3a, 3b, Na, Nb) and the respective conductive tap lines (32, Ia, Ib, IIa, IIb) from the signal service pathway (1, 2).

10. The method of claim 9, wherein when all active pairs are connected to the termination module or termination modules (A, 46), first insert insulating plugs (C) in all the disconnect slots (80) of the termination module or termination modules (A, 46).

11. The method of claims 9 and 10, further comprising connecting the second copper signal pathway (52) with the pairs that carry the new service (40) to the other side of the termination module or termination modules (A, 46).

12. The method of claim 9, wherein the termination module or termination modules (A, 46) remain in place.

13. The method of claim 9, wherein the termination module or termination modules (A, 46) are removed and a direct connection with a connector (122") is made between the pairs carrying the new service (40) and the active pairs in the first copper signal pathway (22, 22a, 22b) going to the subscriber location (30).

14. The method of claim 9, wherein a direct connection is made between the pairs carrying the new service (40) and the active pairs in the first copper signal pathway (22) going to the subscriber location (30) before removing the termination module or termination modules (A, 46) using new wires and new half taps (B, 122, 122', 122").

15. A system for implementing the method of any of claims 1-14, the system comprising:
one or more termination modules (A, 46) for terminating conductive tap lines (32, Ia, Ib, IIa, IIb), wherein a conductive tap line (32, Ia, Ib, IIa, IIb) is added to each wire of at least one twisted wire pair (la, 1b, 2a, 2b, 3a, 3b, Na, Nb) of a first copper signal pathway (22, 22a, 22b); and
a plurality of electrical connectors (B, 122, 122', 122") for adding the conductive tap lines (32, Ia, Ib, IIa, IIb) to the wires of the at least one twisted wire pair (la, 1b, 2a, 2b, 3a, 3b, Na, Nb) of the first copper signal pathway (22, 22a, 22b);
a removable disconnection plug (C) for holding open the normally closed contact set of terminated conductive tap lines (32, Ia, Ib, IIa, IIb);
wherein the one or more termination modules (A, 46) and the plurality of electrical connectors (B, 122, 122', 122") are adapted to cooperate to provide an interruption free copper cable interception and re-routing from an existing service (20) to a new service (40) avoiding transmission effects during the changeover, wherein the removable disconnection plug (C) is removed at the conclusion of the re-routing from the existing service (20) to the new service (40).

## Patentansprüche

1. Verfahren zum Bereitstellen eines Telekommunikationsdienstes, umfassend:
Bereitstellen eines Signaldienstpfads (1, 2) von einer ersten Dienstquelle (20) zu einem Teilnehmerstandort (30), wobei der Signaldienstpfad (1, 2) einen ersten Kupfersignalpfad (22, 22a, 22b) umfasst, der mindestens ein Paar von verdrillten Kupferdrähten (1a, 1b, 2a, 2b, 3a, 3b, Na, Nb) umfasst;
Zugreifen auf mindestens eines der Paare von Drähten (1a, 1b, 2a, 2b, 3a, 3b, Na, Nb), und Hinzufügen eines leitenden Leitungsabzweigs (32, Ia, IIa, IIb) zu jedem Draht (1a, 1b, 2a, 2b, 3a, 3b, Na, Nb);
Abschließen der leitenden Leitungsabzweige (32, Ia, Ib, IIa, IIb) an einem Abschlussmodul oder an Abschlussmodulen (A, 46) mit einer normalerweise geschlossenen Konfiguration, wobei die normalerweise geschlossene Konfiguration einen normalerweise geschlossenen Kontaktsatz (64) umfasst, wobei ein Trennstecker (C) den normalerweise geschlossenen Kontaktsatz (64) offen hält;
Abschließen eines zweiten Kupfersignalpfads (52), der mindestens ein Paar von verdrillten Kupferdrähten umfasst, an dem Abschlussmodul oder den Anschlussmodulen (A, 46);
Schneiden oder anderweitiges Unterbrechen des Signaldienstpfads (1, 2) an einer Stelle zwischen der ersten Dienstquelle (20) und den leitenden Leitungsabzweigen (32, Ia, Ib, IIa, IIb);
nachdem der Signaldienstpfad (1, 2) geschnitten ist, Entfernen des Trennsteckers (C), wobei der zweite Kupfersignalpfad (52) mit dem ersten Kupfersignalpfad (22, 22b) und mit dem Teilnehmerstandort (30) verbunden ist.

2. Verfahren nach Anspruch 1, wobei jeder leitende Leitungsabzweig (32, Ia, Ib, IIa, IIb) unter Verwendung eines Einzelleitungsverbinders (B, 122, 122', 122") hinzugefügt wird, sodass der leitende Leitungsabzweig (32, Ia, Ib, IIa, IIb) zu jedem Draht (1a, 1b, 2a, 2b, 3a, 3b, Na, Nb) elektrisch parallel und unterbrechungsfrei verbunden ist, wobei der Einzelleitungsverbinder (B, 122, 122', 122") drei elektrische Anschlusspunkte mit gleichem elektrischen Potential bereitstellt.

3. Verfahren nach Anspruch 1, wobei das Abschlussmodul oder die Abschlussmodule (A, 46) einen Schneidklemm-Verbindungsblock umfassen.

4. Verfahren nach Anspruch 1, wobei der zweite Kupfersignalpfad (52) mit einer neuen Dienstvorrichtung (40) vorverkabelt wird.

5. Verfahren nach Anspruch 2, wobei das Abschlussmodul oder die Abschlussmodule (A, 46) und die Einzelleitungsverbinder (B) in einem Gehäuse (D) integriert sind.

6. Verfahren nach Anspruch 5, wobei das Gehäuse (D) einen mehrfachen Zugriff ermöglicht und einen abgedichteten Schutz gegen Umwelteinflüsse bereitstellt.

7. Verfahren nach Anspruch 5, wobei das Gehäuse (D) eine wärmeschrumpfbare Verschlussvorrichtung umfasst.

8. Verfahren nach Anspruch 1, wobei jeder leitende Leitungsabzweig (32, Ia, Ib, IIa, IIb) unter Verwendung von zwei Halbabzweigen (B, 122, 122', 122") parallel zu dem jeweiligen Draht (1a, 1b, 2a, 2b, 3a, 3b, Na, Nb) hinzugefügt wird, wobei jeder leitende Leitungsabzweig (32, Ia, Ib, IIb, IIb) durch einen IDC-Verbinder (60) an einem jeweiligen Port (72) des Abschlussmoduls oder der Abschlussmodule (A, 46) hindurch verläuft.

9. Verfahren nach Anspruch 8, ferner umfassend:
Prüfen, ob Drähte (1a, 1b, 2a, 2b, 3a, 3b, Na, Nb) des mindestens einen verdrillten Paars aktiv sind, durch Messen zwischen den IDC-Verbindern (60) des Abschlussmoduls oder der Abschlussmodule (A, 46), wobei das Messen zwischen den IDC-Verbindern (60) durch Einstecken eines Prüfsteckers in einen Trennschlitz (80) des Abschlussmoduls oder der Abschlussmodule (A, 46) umgesetzt wird;
falls aktiv, Entfernen der Drähte (1a, 1b, 2a, 2b, 3a, 3b, Na, Nb) des mindestens einen verdrillten Paars zwischen den zwei Halbabzweigen (B, 122, 122', 122"); und
falls nicht aktiv, Schneiden sowohl der Drähte (1a, 1b, 2a, 2b, 3a, 3b, Na, Nb) als auch der jeweiligen leitenden Leitungsabzweige (32, Ia, Ib, IIa, IIb) aus dem Signaldienstpfad (1, 2) heraus.

10. Verfahren nach Anspruch 9, wobei, wenn alle aktiven Paare mit dem Abschlussmodul oder den Abschlussmodulen (A, 46) verbunden sind, zuerst isolierende Stecker (C) in alle Trennschlitze (80) des Abschlussmoduls oder der Abschlussmodule (A, 46) eingesetzt werden.

11. Verfahren nach Anspruch 9 und 10, das ferner ein Verbinden der zweiten Kupfersignalpfade (52) mit den Paaren umfasst, die den neuen Dienst (40) zu der anderen Seite des Abschlussmoduls oder der Abschlussmodule (A, 46) führen.

12. Verfahren nach Anspruch 9, wobei das Abschlussmodul oder die Abschlussmodule (A, 46) an Ort und Stelle verbleiben.

13. Verfahren nach Anspruch 9, wobei das Abschlussmodul oder die Abschlussmodule (A, 46) entfernt werden und eine direkte Verbindung mit einem Verbinder (122") zwischen den Paaren, die den neuen Dienst (40) führen, und den aktiven Paaren in dem ersten Kupfersignalweg (22, 22a, 22b), der zu dem Teilnehmerstandort (30) geht, hergestellt wird.

14. Verfahren nach Anspruch 9, wobei eine direkte Verbindung zwischen den Paaren, die den neuen Dienst (40) führen, und den aktiven Paaren in dem ersten Kupfersignalweg (22), der zu dem Teilnehmerstandort (30) geht, unter Verwendung neuer Drähte und neuer Halbabzweige (B, 122, 122', 122") hergestellt wird, bevor das Abschlussmodul oder die Abschlussmodule (A, 46) entfernt werden.

15. System zur Implementierung des Verfahrens nach einem der Ansprüche 1-14, wobei das System Folgendes umfasst:
ein oder mehrere Abschlussmodule (A, 46) zum Abschließen von leitenden Leitungsabzweigen (32, Ia, Ib, IIa, IIb), wobei jedem Draht von mindestens einem verdrillten Drahtpaar (1a, 1b, 2a, 2b, 3a, 3b, Na, Nb) eines ersten Kupfersignalpfads (22, 22a, 22b) ein leitender Leitungsabzweig (32, Ia, Ib, IIb) hinzugefügt ist; und
eine Vielzahl von elektrischen Verbindern (B, 122, 122', 122") zum Hinzufügen der leitenden Leitungsabzweige (32, Ia, Ib, IIa, IIb) zu den Drähten des mindestens einen verdrillten Drahtpaars (1a, 1b, 2a, 2b, 3a, 3b, Na, Nb) des ersten Kupfersignalpfads (22, 22a, 22b);
einen entfernbaren Trennstecker (C) zum Offenhalten des normalerweise geschlossenen Kontaktsatzes von abgeschlossenen leitenden Leitungsabzweigen (32, Ia, Ib, IIa, IIb);
wobei das eine oder die mehreren Abschlussmodule (A, 46) und die Vielzahl von elektrischen Verbindern (B, 122, 122', 122") dafür ausgelegt sind, so zusammenzuwirken, dass eine unterbrechungsfreie Kupferkabelabfangung und -umleitung von einem bestehenden Dienst (20) zu einem neuen Dienst (40) bei gleichzeitigem Vermeiden von Übertragungseffekten während des Umschaltens bereitgestellt wird, wobei der entfernbare Trennstecker (C) bei Abschluss der Umleitung von dem bestehenden Dienst (20) und dem aktiven Dienst (40) entfernt wird.

## Revendications

1. Procédé de fourniture de service de télécommunications comprenant :
la fourniture d'une voie de service de signal (1, 2) d'une première source de service (20) à un emplacement d'abonné (30), dans lequel la voie de service de signal (1, 2) comporte une première voie de signal en cuivre (22, 22a, 22b) comportant au moins une paire de fils de cuivre torsadés (la, 1b, 2a, 2b, 3a, 3b, Na, Nb) ;
l'accès à au moins l'une des paires de fils (la, 1b, 2a, 2b, 3a, 3b, Na, Nb), et l'ajout d'une ligne de dérivation conductrice (32, Ia, IIa, IIb) à chaque fil (la, 1b, 2a, 2b, 3a, 3b, Na, Nb) ;
la terminaison des lignes de dérivation conductrices (32, Ia, Ib, IIa, IIb) au niveau d'un module de terminaison ou de modules de terminaison (A, 46) avec une configuration normalement fermée, dans lequel la configuration normalement fermée comporte un ensemble de contacts normalement fermés (64), dans lequel une fiche de déconnexion (C) maintient ouvert l'ensemble de contacts normalement fermés (64) ;
la terminaison d'une deuxième voie de signal en cuivre (52) comportant au moins une paire de fils de cuivre torsadés au niveau du module de terminaison ou des modules de terminaison (A, 46) ;
la coupure ou autrement la rupture de la voie de service de signal (1, 2) à un emplacement entre la première source de service (20) et les lignes de dérivation conductrices (32, Ia, Ib, IIa, IIb) ;
après la coupure de la voie de service de signal (1, 2), le retrait de la fiche de déconnexion (C), dans lequel la deuxième voie de signal en cuivre (52) est connectée à la première voie de signal en cuivre (22, 22b) et à l'emplacement d'abonné (30).

2. Procédé selon la revendication 1, dans lequel chaque ligne de dérivation conductrice (32, Ia, Ib, IIa, IIb) est ajoutée à l'aide d'un connecteur de ligne simple (B, 122, 122', 122") de sorte que la ligne de dérivation conductrice (32, Ia, Ib, IIa, IIb) à chaque fil (la, 1b, 2a, 2b, 3a, 3b, Na, Nb) soit connectée électriquement en parallèle et sans interruption, le connecteur de ligne simple (B, 122, 122', 122") fournissant trois points d'accès électriques sur le même potentiel électrique.

3. Procédé selon la revendication 1, dans lequel le module de terminaison ou les modules de terminaison (A, 46) comportent un bloc de connexion à déplacement d'isolation.

4. Procédé selon la revendication 1, dans lequel le deuxième chemin de signal en cuivre (52) est précâblé vers un nouveau dispositif de service (40).

5. Procédé selon la revendication 2, dans lequel le module de terminaison ou les modules de terminaison (A, 46) et les connecteurs de ligne simple (B) sont intégrés dans une enveloppe (D).

6. Procédé selon la revendication 5, dans lequel l'enveloppe (D) permet un accès à de multiples reprises et assure une protection étanche contre l'influence de l'environnement.

7. Procédé selon la revendication 5, dans lequel l'enveloppe (D) comporte un dispositif de fermeture thermorétractable.

8. Procédé selon la revendication 1, dans lequel chaque ligne de dérivation conductrice (32, Ia, Ib, IIa, IIb) est ajoutée en parallèle au fil (la, 1b, 2a, 2b, 3a, 3b, Na, Nb) respectif à l'aide de deux demi-prises (B, 122, 122', 122"), chaque ligne de dérivation conductrice (32, Ia, Ib, IIb) traversant un connecteur IDC (60) au niveau d'un port (72) respectif du module de terminaison ou des modules de terminaison (A, 46).

9. Procédé selon la revendication 8, comprenant en outre :
la mise à l'essai du fait que des fils (la, 1b, 2a, 2b, 3a, 3b, Na, Nb) de l'au moins une paire torsadée sont actifs ou non par la mesure entre les connecteurs IDC (60) du module de terminaison ou des modules de terminaison (A, 46), dans lequel la mesure entre les connecteurs IDC (60) est mise en œuvre par insertion d'une fiche d'essai dans une fente de déconnexion (80) du module de terminaison ou des modules de terminaison (A, 46) ;
s'ils sont actifs, le retrait des fils (la, 1b, 2a, 2b, 3a, 3b, Na, Nb) de l'au moins une paire torsadée entre les deux demi-prises (B, 122, 122', 122") ; et
s'ils ne sont pas actifs, la coupure à la fois des fils (la, 1b, 2a, 2b, 3a, 3b, Na, Nb) et des lignes de dérivation conductrices (32, Ia, Ib, IIa, IIb) respectives de la voie de service de signal (1, 2).

10. Procédé selon la revendication 9, dans lequel lorsque toutes les paires actives sont connectées au module de terminaison ou aux modules de terminaison (A, 46), des fiches isolantes (C) sont d'abord insérées dans toutes les fentes de déconnexion (80) du module de terminaison ou des modules de terminaison (A, 46).

11. Procédé selon les revendications 9 et 10, comprenant en outre la connexion des deuxièmes voies de signal en cuivre (52) avec les paires qui portent le nouveau service (40) jusqu'à l'autre côté du module de terminaison ou des modules de terminaison (A, 46).

12. Procédé selon la revendication 9, dans lequel le module de terminaison ou les modules de terminaison (A, 46) restent en place.

13. Procédé selon la revendication 9, dans lequel le module de terminaison ou les modules de terminaison (A, 46) sont retirés et une connexion directe avec un connecteur (122") est établie entre les paires portant le nouveau service (40) et les paires actives sur la première voie de signal en cuivre (22, 22a, 22b) allant à l'emplacement d'abonné (30).

14. Procédé selon la revendication 9, dans lequel une connexion directe est établie entre les paires portant le nouveau service (40) et les paires actives sur la première voie de signal en cuivre (22) allant à l'emplacement d'abonné (30) avant le retrait du module de terminaison ou des modules de terminaison (A, 46) à l'aide de nouveaux fils et de nouvelles demi-prises (B, 122, 122', 122").

15. Système de mise en œuvre du procédé de l'une quelconque des revendications 1 à 14, le système comprenant :
un ou plusieurs modules de terminaison (A, 46) destinés à terminer des lignes de dérivation conductrices (32, Ia, Ib, IIa, IIb), dans lequel une ligne de dérivation conductrice (32, Ia, Ib, IIa, IIb) est ajoutée à chaque fil d'au moins une paire de fils torsadés (la, 1b, 2a, 2b, 3a, 3b, Na, Nb) d'une première voie de signal en cuivre (22, 22a, 22b) ; et
une pluralité de connecteurs électriques (B, 122, 122', 122") destinés à ajouter les lignes de dérivation conductrices (32, Ia, Ib, IIa, IIb) aux fils de l'au moins une paire de fils torsadés (la, 1b, 2a, 2b, 3a, 3b, Na, Nb) de la première voie de signal en cuivre (22, 22a, 22b) ;
une fiche de déconnexion amovible (C) destinée à maintenir ouvert l'ensemble de contacts normalement fermés de lignes de dérivation conductrices (32, Ia, Ib, IIa, IIb) terminées ;
dans lequel les un ou plusieurs modules de terminaison (A, 46) et la pluralité de connecteurs électriques (B, 122, 122', 122") sont adaptés pour coopérer afin de fournir une interception de câble en cuivre sans interruption et un réacheminement d'un service existant (20) vers un nouveau service (40) en évitant des effets de transmission pendant le transfert, dans lequel la fiche de déconnexion amovible (C) est retirée à la fin du réacheminement du service existant (20) vers le nouveau service (40).
